# EUROPEAN PATENT SPECIFICATION

(11) **EP 1 569 809 B1**
(45) Date of publication and mention of the grant of the patent: **11.08.2010**
(21) Application number: 03780667.6
(22) Date of filing: 12.12.2003
(51) Int. Cl.: B60B 21/06, B60B 1/04

(54) **A WHEEL SPOKE AND A METHOD FOR THE MANUFACTURE THEREOF**
RADSPEICHE UND HERSTELLUNGSVERFAHREN
RAYON POUR ROUES ET PROCEDE DE FABRICATION CORRESPONDANT

(30) Priority: 13.12.2002 IT BO20020783; 24.12.2002 IT PD20020334; 03.02.2003 EP 03002313; 28.03.2003 EP 03007123
(43) Date of publication of application: 07.09.2005
(73) Proprietor: ALPINA RAGGI S.p.A., 23871 Lomagna (LC) (IT)
(72) Inventor: CAPPELLOTTO, Guido, c/o Alpina Raggi S.p.A., 20043 Arcore (IT); FIORAVANTI, Moreno, c/o Alpina Raggi S.p.A., 20043 Arcore (IT); RIBEIRO, Joao Miranda Carlos, c/o Alpina Raggi Spa, 20043 Arcore (IT); KAWAI, Steve, c/o Alpina Raggi S.p.A., 20043 Arcore (IT)
(74) Representative: Cantaluppi, Stefano
(86) International application number: PCT/IT2003/000812
(87) International publication number: WO 2004/054819

(56) References cited:
- EP-A- 1 209 006
- DE-A- 3 117 415
- US-A- 4 729 605
- US-A- 6 036 279
- PATENT ABSTRACTS OF JAPAN vol. 0092, no. 23 (M-411), 10 September 1985 (1985-09-10) & JP 60 080901 A (MITSUBISHI RAYON KK), 8 May 1985 (1985-05-08)

## Description

The invention relates to a spoke of the type including the characteristics mentioned in the preamble to the main claim and also relates to a method for the production thereof.

Specifically, the preferred application of the invention is for the production of spokes from light alloy. On account of their mechanical strength characteristics, these materials are unsuitable for the production of spokes by conventional methods.

Typically, wheel spokes, including those made of light alloy, comprise a shaft having an end (for example, shaped with an enlarged head) for attachment to the wheel hub and, at the axially opposite end, a thread onto which a nipple, by means of which the spoke is connected to the wheel rim, is screwed adjustably. A spoke with these characteristics can easily be produced from strong materials such as steel but presents some problems of mechanical strength when made of aluminium alloy. The greatest problem arises in the region of the nipple screw-thread which is liable to give way and be damaged under stress. The spoke consequently becomes loose or breaks.

JP60080901A2 in the name of MITSUBISHI RAYON CO. LTD. describes a composite wheel spoke including a reinforced-resin shaft with a fibre reinforcement, on the ends of which respective metal terminals are fitted. However, this solution is not suitable for the production of light alloy spokes since it involves a considerable dimensional increase of the ends of the spoke in the region of the terminals, relative to the shaft. In light alloy spokes, the shaft itself is already thick.

Substantially similar problems are encountered with reference to the spoke described in US patent 6036279 in the name of Campagnolo Srl.

The main task of the invention is to provide a strong and reliable spoke, preferably of the type having a light alloy shaft.

Within the scope of this task, an important object of the invention is to define a method for the production of such a spoke in a reliable and secure manner with reasonably low costs.

Another object of the invention is to limit the dimensions of the spoke, in particular in the region of the nipple screw-thread and/or in the region of the head.

A further object of the invention is to permit the use of conventional rims and nipples whilst using light alloy spokes.

This task and these objects are achieved by the invention by means of a wheel spoke formed in accordance with the appended claims.

The characteristics and the advantages of the invention will become clearer from the detailed description of a preferred embodiment thereof which is described by way of non-limiting example with reference to the appended drawings, in which:
- Figure 1 is a partially-sectioned, elevational view of a detail of a bicycle wheel equipped with a spoke according to the present invention,
- Figure 2 is an elevational view of a detail of the spoke of Figure 1, on an enlarged scale,
- Figure 3 is a partially-sectioned, elevational view of a detail of a bicycle wheel equipped with a spoke according to a variant of the present invention,
- Figures 4 and 5 are elevational views, on an enlarged scale, of the details indicated by the arrows IV and V of Figure 3, respectively,
- Figures 6 and 7 are partially-sectioned front and side views of a wheel spoke according to a further variant of the invention,
- Figure 8 is a section through a detail of the spoke of Figures 6 and 7, on an enlarged scale,
- Figure 9 is an elevational view of a further spoke according to the invention,
- Figure 10 incorporates a series of cross-sectional views of various profiles of the spoke of Figure 9,
- Figures 11 to 17 are elevational views of spokes of different shapes produced in accordance with the invention,
   the pairs of Figures 18-19, 20-21 and 22-23 are front and side elevational views, respectively, of a corresponding number of spokes produced in accordance with the invention, and
- Figure 24 is a side elevational view of a further spoke according to the invention.

In the drawings, a spoked wheel, generally indicated R, includes a rim C connected to a wheel hub (not shown), by means of a plurality of spokes 10. Each spoke is connected to the wheel hub at one end by means of an attachment having a head 11 (the shape and arrangement of the head 11 may be varied as desired) and to the rim C at the other end by means of a respective nipple N.

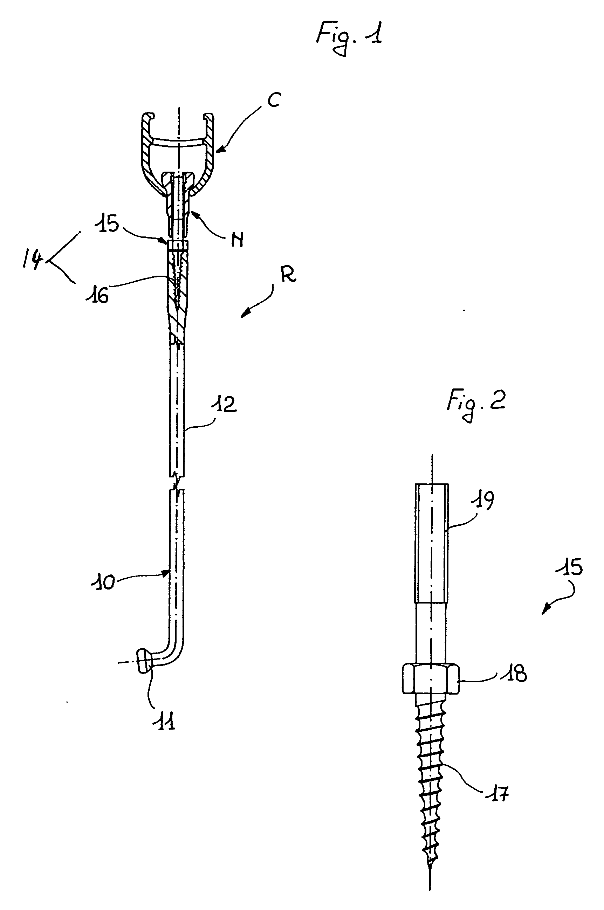

Each spoke 10 comprises a straight shaft 12 which, in the embodiment of Figures 1 and 2, is formed, integrally with the head 11, from light alloy, for example, aluminium alloy. Amongst the alloys most suitable for this purpose, the following are mentioned: Anticorodal 100, Avional 22, Avional 14, Avional 24, Ergal 55.

A terminal element 15 carrying a screw thread 19 for the nipple N is fitted on the longitudinal end 13 of the shaft 12 remote from the head 11, by fixing means 14.

According to the invention, the fixing means 14 comprise a stud-bolt-type connection with a blind axial hole 16 in the end of the shaft 12 and a self-tapping thread 17 on the terminal element 15.

The terminal element is made of steel and therefore has greater mechanical strength than the material of which the shaft is made. Both the hole 16 and the thread 17 are formed with conical profiles.

A driving key 18, for example, with a hexagonal profile, is provided in an intermediate portion of the terminal element, for the driving of the terminal element 15 into the shaft 12. The terminal element 15 is preferably driven into the shaft 12 with interference, bringing about a localized expansion deformation thereof which is barely visible in Figure 1.

In order to manufacture the spoke 10, the shaft 12 and the terminal element 15 which is to be arranged as an extension thereof are prepared separately. Ari axial hole 16 is then drilled in the shaft and the terminal element 15 is fitted on the shaft with a stud-bolt-type connection, firmly fixing the shaft and the terminal element together axially with interference.

The spoke thus formed is tear-resistant in the nipple-screwing region and is light and robust.

It also has limited dimensions particularly with regard to the nipple-screwing region so as to permit the use of standard nipples.

The invention is also suitable for the production of spokes of the type with a head anchored to the rim and a nipple anchored to the wheel hub.

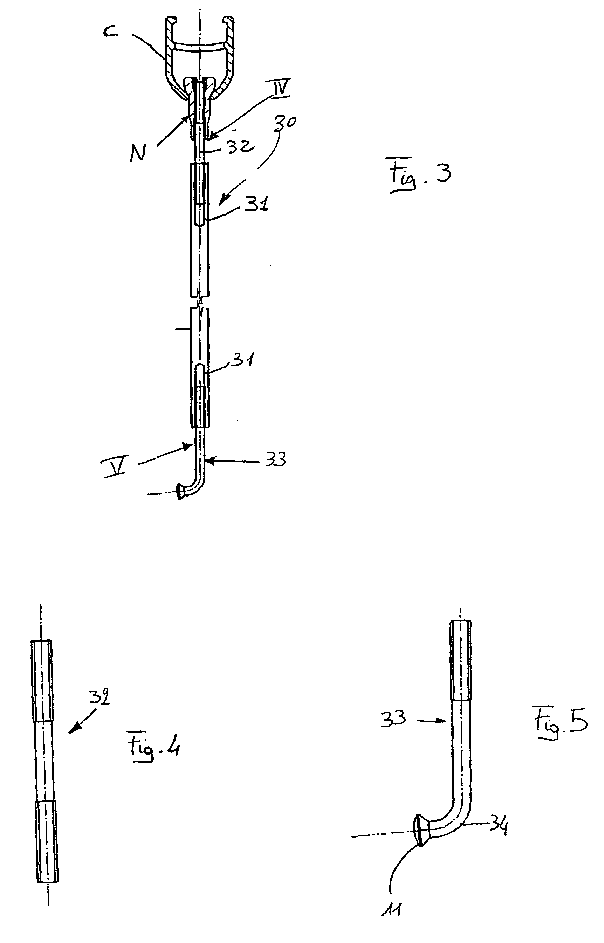

Finally, the spoke may be equipped with terminal elements of the type described at both of its longitudinal ends for fixing by means of nipples or similar devices both to the rim and to the hub. Figures 3 to 5 show an example of such a spoke, generally indicated 30. The spoke 30 has a light-alloy shaft drilled with blind holes 31 at both of its opposite ends. Respective terminal elements 32, 33 made of steel or other material with good mechanical strength are inserted in the two holes 31 with a stud-bolt-type connection. The first terminal element 32 is similar to the element 15 and is provided with a threaded portion for the screwing of the nipple N. The second terminal element is shaped as a standard attachment with a head 11 and an elbow 34. However, the second element may also be formed so as to be straight, or with a threaded portion, or in another manner. By virtue of these arrangements, light-alloy spokes can also be used on wheels the overall structure (rim and/or hub) of which is designed for the fitting of steel spokes, resulting in greater compactness and smaller dimensions both of the rim and of the hub, to the benefit of lightness and aerodynamic characteristics, etc.

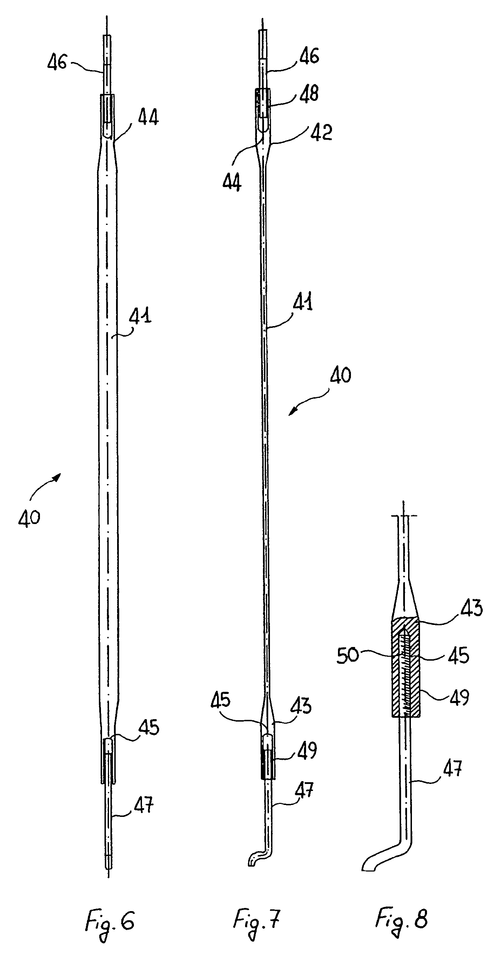

A third variant of the spoke of the invention is indicated 40 in Figures 6 to 8. The shaft 41 of the spoke 40 is flattened in its intermediate portion by calendering or an equivalent technique and has circular-sectioned cylindrical end portions 42, 43 in which the respective blind axial holes 44, 45 are formed.

Each of the terminal elements 46, 47 carries a threaded portion 48, 49 to be screwed into the respective hole 44, 45, preferably with a force fit. The terminal element 46 carries a second, opposed threaded portion for the screwing of the nipple, and the element 47 carries a so-called Z-shaped head for engaging a corresponding hole in the hub.

The extent of the axial holes 44, 45 is such that, when the corresponding threaded portion 48, 49 has been fully screwed in, a free chamber 50 no less than approximately one third of the overall length of the hole remains in the hole. It has been found that this chamber 50 is useful for distributing, within adequate and tolerable values, the excess pressures resulting both from the deformation of the shaft of the spoke due to the forcing of the corresponding terminal element and from the increase in pressure of the fluids that are trapped in the chamber 50 during the screwing of the threaded portion 48, 49. In fact, since the screwing of the threaded portion takes place without previous threading of the blind hole, (in practice the thread of the steel portion 48, 49 deforms the aluminium alloy walls of the blind hole forming a substantially fluid-tight self-tapping connection) the air, with any liquids and vapours trapped in the blind hole 44, 45, is compressed as a result of the progressive reduction in the volume of the chamber and this leads to an increase in the stresses on the shaft of the spoke in the end region which is already weakened by the presence of the blind hole 44, 45. ,

The invention thus solves the problem posed and affords many advantages over the prior art. In the first place, it permits the use of conventional rims and hubs without requiring any specific adaptation. Moreover, the spoke is strong and reliable. Not the least advantage is that it is light and suitable to be manufactured with advantageous aerodynamic profiles and/or profiles with distinctive aesthetic effects which, amongst other things, can confer on the assembled wheel a visual effect similar to that of a wheel with integral spokes.

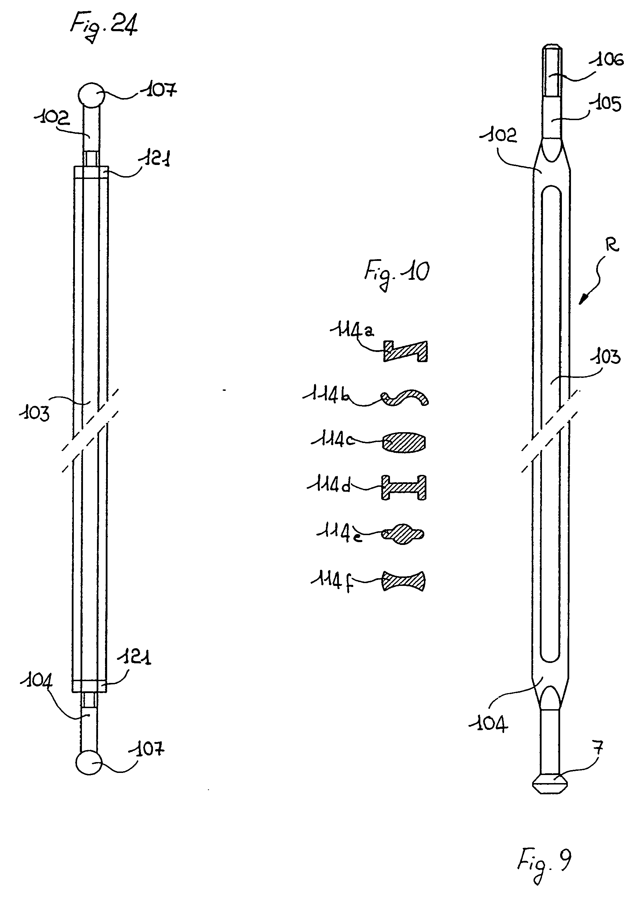

Some of these profiles are described in Italian patent application No. BO 2002A783, publication No. IT 1337029. These profiles are represented, by way of example, by the spoke cross-sections 114a-f which are described with reference to Figures 9 and 10. They are produced by a processing method which comprises the preparation of semi-finished elements in the form of billets of light alloy such as the alloys identified above (trade names Ergal, Avional, Peraluman, Anticorodal), which are cut into pieces of suitable length and subjected to press-forging in a press suitably equipped with dies and matrices suitable for the forging of metal alloy spokes.

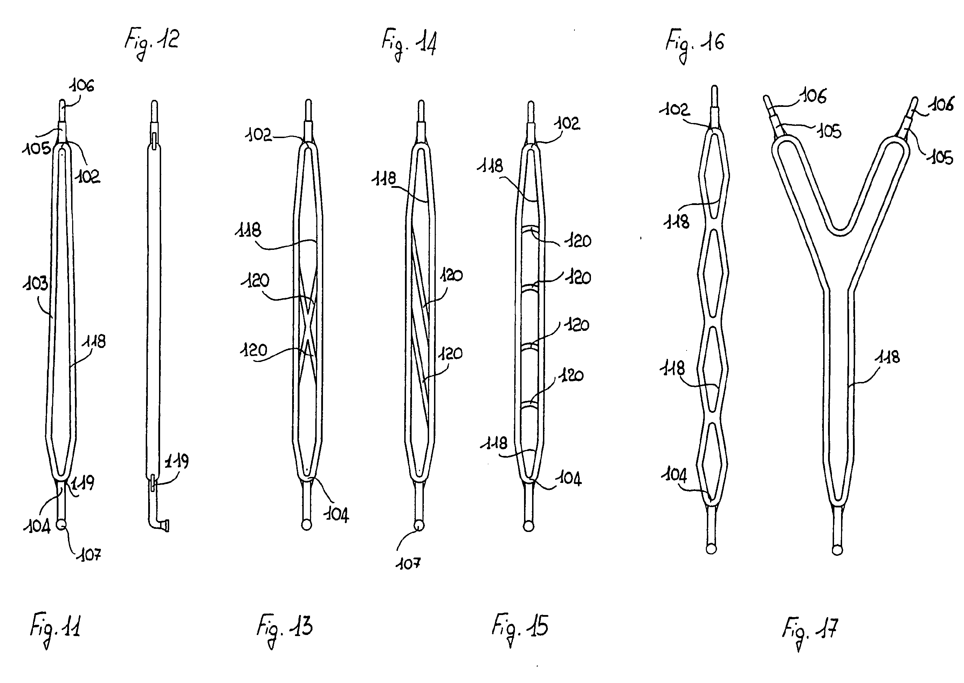

Figures 11 to 17 relate to alternative embodiments of the spoke that can be produced by the method. From the front, they are substantially lance-shaped, having a longitudinal aperture 118 which extends from a first end 102 to a second end 104. Substantially triangular lateral ribs 119, arranged reflectively symmetrically with respect to the longitudinal plane of symmetry of the spoke, are provided in the region of the first and second ends. The second end 104 is bent into an elbow (Figure 12) to facilitate the engagement of the head 107 in the respective hole provided in the wheel hub.

Figure 13 is a front view of a lanceolate spoke having a longitudinal slot-like aperture 118 interrupted by a pair of bridges 120 in a substantially X-shaped arrangement. Figure 14 relates to an embodiment in which the two bridges 120 are arranged parallel to one another, substantially diagonally, and Figure 15 shows a further embodiment provided with four substantially transverse bridges 120. A further embodiment is shown in Figure 16; it provides for the formation of four substantially lozenge-shaped, aligned longitudinal apertures 118. Figure 17 shows another embodiment of the spoke which can be produced by the method according to the invention, in which the first end 102 for fixing to the rim is substantially Y-shaped with two shanks 105 having respective threaded portions 106 which, engage in respective nipples. The spoke has a substantially Y-shaped central aperture 118 corresponding to the shape of the spoke itself. The central portions 103 of the embodiments of the spokes shown in Figures 11-17 have composite cross-sections which, moreover, are variable from one end of the same spoke to the other.

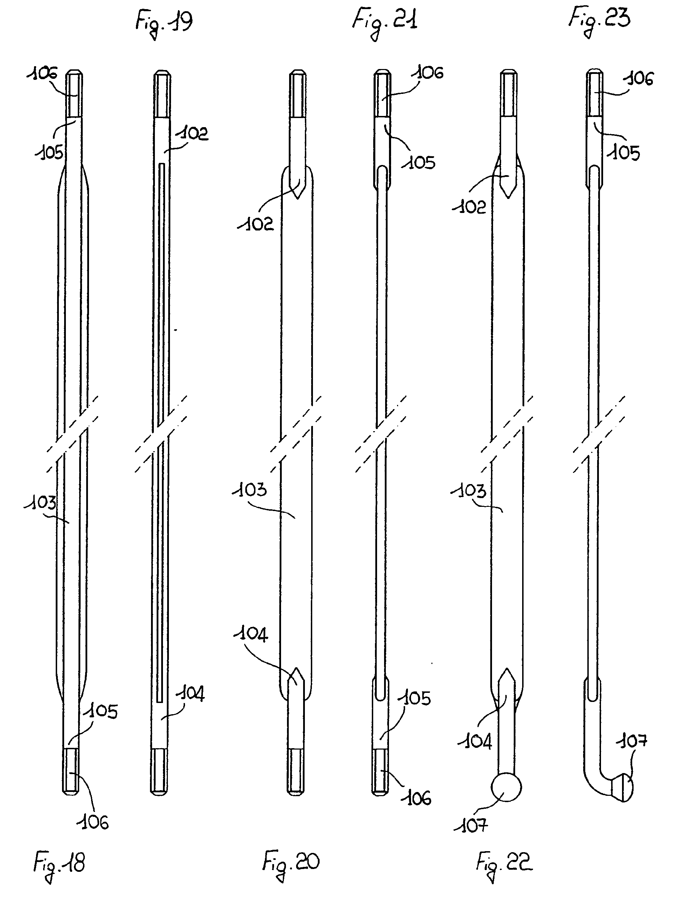

In Figures 18 to 23, the spoke has a simple or composite cross-section of the central portion 103 (in the embodiment in question, the central portion is substantially flattened), both the first end 102 and the second end 104 having respective cylindrical shanks 105 having threaded end portions 106 for engagement in respective nipples.

Figures 22 and 23 show a front view and a side elevation, respectively, of the spoke of Figures 20, 21, but in which the second end 104 forms a head 107 for engagement in the wheel hub.

Figure 24 shows an embodiment of the spoke which can be produced by the method according to the invention and in which the first and second ends 102, 104 are removable, that is, interchangeable. In the spoke of Figure 24, each of the ends 102, 104 is substantially in the form of a partially threaded shaft which is engaged releasably, with the aid of a lock nut 121, in a respective female thread formed in the central portion 103 of the spoke. The ends 102, 104 form respective spherical heads 107 for anchoring to the hub and to the rim of the wheel.

The spokes that can be produced by the method according to the invention are distinguished by a high degree of strength, toughness and resilience, combined with considerable lightness. They also permit the production of wheels with aesthetic and functional characteristics which are innovative with respect to conventional types; moreover, a further considerable production advantage can be recognized and consists in that there is no need to provide a complete wheel die, as for the production of monolithic diecast wheels, but the geometry of the wheel can be varied appreciably simply by replacing the spoke-forging dies and matrices.

## Claims

1. A spoke (10; 30; 40) for wheels (R) comprising a shaft (12; 41) having opposed longitudinal ends on at least one of which a terminal element (15; 32, 33; 46, 47) carrying a device (19) for the attachment of the spoke (10; 30; 40) to the respective wheel component is fitted by means of fixing means (14), **characterized in that** the fixing means (14) comprise a stud-bolt-type threaded connection between the shaft (12; 41) and the terminal element (15; 32, 33; 46, 47).

2. A spoke according to Claim 1 in which the stud-bolt-type connection comprises an axial hole (16) in the end of the shaft (12) and a thread (17) on the terminal element (15; 32, 33; 46, 47), the coupling between the hole (16) and the thread (17) being of the threaded or self-tapping type.

3. A spoke according to Claim 1 or Claim 2 in which the shaft (12) is made of a material having a mechanical strength less than that of the material of which the terminal element (15; 32, 33; 46, 47) is made.

4. A spoke according to Claim 3 in which the shaft (12; 41) is made of light alloy.

5. A spoke according to Claim 3 in which the terminal element (15; 32, 33; 46, 47) is made of steel.

6. A spoke according to one or more of the preceding claims in which the self-tapping thread (17) is formed with a conical profile.

7. A spoke according to one or more of the preceding claims in which a driving key (18) is provided in an intermediate portion of the terminal element (15), for the driving of the terminal element (15) into the shaft (12).

8. A spoke according to one or more of the preceding claims in which the terminal element (15; 32, 33; 46, 47) is driven into the shaft (12) with interference.

9. A spoke according to one or more of the preceding claims in which the terminal element (15; 32, 33; 46, 47) is provided, at the end remote from the shaft (12), with means for connection to a nipple (N).

10. A spoke according to one or more of the preceding claims in which the terminal element (15; 32, 33; 46, 47) is provided, at the end remote from the shaft (12), with means for connection to a wheel hub.

11. A spoke according to Claim 9 in which the connection means comprise a threaded portion (48, 49) of the terminal element (15; 32, 33; 46, 47).

12. A spoke according to Claim 10 in which the means for connection to a hub comprise an attachment element.

13. A spoke according to one or more of the preceding claims in which the hole (44, 45) in the shaft (41) is blind and has a greater extent than the threaded portion (48, 49) of the terminal element (46, 47) which is engaged therein, so as to define a chamber (50) in the hole (44, 45).

14. A spoke according to Claim 13 in which the axial extent of the chamber (50) is greater than or equal to one third of the overall axial extent of the blind hole (44, 45).

15. A method for the manufacture of a wheel spoke (10; 30; 40) comprising the steps of preparing a shaft (12; 41) and separately preparing at least one terminal element (15; 32, 33; 46, 47) to be arranged as an extension of the shaft (12; 41), the shaft (12; 41) being made of a material having a mechanical strength less than that of the material with which the terminal element (15; 32, 33; 46, 47) is made, **characterized in that** the terminal element (15; 32, 33; 46, 47) is fitted on the shaft (12; 41) by means of a stud-bolt-type connection, firmly fixing the shaft (12; 41) and the terminal (15; 32, 33; 46, 47) together axially.

16. A method according to Claim 15 in which the connection is forced with interference.

17. A method according to Claim 15 or Claim 16 in which the stud-bolt-type connection is performed with a self-tapping coupling.

18. A wheel spoke produced by the method according to any one of claims 15 to 17, and further comprising the step of press-forging of metal alloy so as to obtain a spoke having a substantially Y-shaped configuration with two shanks (105) at the same end, the shanks (105) having respective threaded portions (106) for the engagement of respective nipples.

19. A spoke according to Claim 18 including a central aperture (118) of a shape corresponding to the external shape of the spoke itself.

## Patentansprüche

1. Speiche (10; 30; 40) für Räder (R), umfassend einen Schaft (12; 41) mit gegenüberliegenden Längsenden, wobei auf zumindest einem davon ein Anschlusselement (15; 32; 33; 46; 47), das eine Vorrichtung (19) für die Befestigung der Speiche (10; 30; 40) an dem jeweiligen Radbauteil trägt, mittels einer Befestigungseinrichtung (14) eingepasst ist, **dadurch gekennzeichnet, dass** die Befestigungseinrichtung (14) eine schraubbolzenartige Gewindeverbindung zwischen dem Schaft (12; 41) und dem Anschlusselement (15; 32; 33; 46; 47) umfasst.

2. Speiche nach Anspruch 1, wobei die schraubbolzenartige Verbindung ein axiales Loch (16) in dem Ende des Schaftes (12) und ein Gewinde (17) auf dem Anschlusselement (15; 32; 33; 46; 47) umfasst, wobei die Verbindung zwischen dem Loch (16) und dem Gewinde (17) vom Gewindetyp oder selbstschneidend ist.

3. Speiche nach Anspruch 1 oder Anspruch 2, wobei der Schaft (12) aus einem Material gefertigt ist, das eine mechanische Festigkeit aufweist, die geringer ist als diejenige des Materials, aus dem das Anschlusselement (15; 32; 33; 46; 47) gefertigt ist.

4. Speiche nach Anspruch 3, wobei der Schaft (12; 41) aus einer Leichtmetalllegierung gefertigt ist.

5. Speiche nach Anspruch 3, wobei das Anschlusselement (15; 32; 33; 46; 47) aus Stahl gefertigt ist.

6. Speiche nach einem oder mehreren der vorstehenden Ansprüche, wobei das selbstschneidende Gewinde (17) mit einem konischen Profil ausgebildet ist.

7. Speiche nach einem oder mehreren der vorstehenden Ansprüche, wobei ein Mitnehmer (18) in einem Zwischenbereich des Anschlusselements (15) vorgesehen ist, um das Anschlusselement (15) in den Schaft (12) hineinzutreiben.

8. Speiche nach einem oder mehreren der vorstehenden Ansprüche, wobei das Anschlusselement (15; 32; 33; 46; 47) mit einem Übermaß in den Schaft (12) hineingetrieben wird.

9. Speiche nach einem oder mehreren der vorstehenden Ansprüche, wobei das Anschlusselement (15; 32; 33; 46; 47) an dem Ende entfernt von dem Schaft (12) mit einer Einrichtung zur Verbindung zu einem Nippel (N) vorgesehen ist.

10. Speiche nach einem oder mehreren der vorstehenden Ansprüche, wobei das Anschlusselement (15; 32; 33; 46; 47) an dem Ende entfernt von dem Schaft (12) mit einer Einrichtung zur Verbindung zu einer Radnabe vorgesehen ist.

11. Speiche nach Anspruch 9, wobei die Verbindungseinrichtung einen Gewindebereich (48, 49) des Anschlusselements (15; 32; 33; 46; 47) umfasst.

12. Speiche nach Anspruch 10, wobei die Einrichtung zur Verbindung zu einer Nabe ein Befestigungselement umfasst.

13. Speiche nach einem oder mehreren der vorstehenden Ansprüche, wobei das Loch (44, 45) in dem Schaft (41) ein Sackloch ist und eine größere Ausdehnung als der Gewindebereich (48, 49) des Anschlusselements (46, 47), das in dieses eingreift, aufweist, um so eine Kammer (50) in dem Loch (44, 45) zu definieren.

14. Speiche nach Anspruch 13, wobei die axiale Ausdehnung der Kammer (50) größer oder gleich einem Drittel der gesamten axialen Ausdehnung des Sacklochs (44, 45) ist.

15. Verfahren zur Herstellung einer Radspeiche (10; 30; 40), umfassend die Schritte Herstellen eines Schafts (12; 41) und getrenntes Herstellen zumindest eines Anschlusselements (15; 32; 33; 46; 47), das als eine Verlängerung des Schafts (12; 41) angeordnet werden soll, wobei der Schaft (12; 41) aus einem Material gefertigt ist, das eine mechanische Festigkeit aufweist, die geringer ist als diejenige des Materials, aus dem das Anschlusselement (15; 32; 33; 46; 47) gefertigt ist, **dadurch gekennzeichnet, dass** das Anschlusselement (15; 32; 33; 46; 47) mittels einer schraubbolzenartigen Verbindung auf dem Schaft (12; 41) eingepasst ist, welche den Schaft (12; 41) und der Anschluss (15; 32; 33; 46; 44) axial fest aneinander befestigt.

16. Verfahren nach Anspruch 15, wobei die Verbindung mit Übermaß vorgegeben ist.

17. Verfahren nach Anspruch 15 oder Anspruch 16, wobei die schraubbolzenartige Verbindung mittels einer selbstschneidenden Verbindung ausgeführt ist.

18. Radspeiche, hergestellt durch das Verfahren nach einem der Ansprüche 15 bis 17, und ferner umfassend den Schritt des Pressschmiedens einer Metalllegierung, um so eine Speiche zu erhalten, die eine im Wesentlichen Y-förmige Gestalt mit zwei Schenkeln (105) am gleichen Ende aufweist, wobei die Schenkel (105) entsprechende Gewindebereiche (106) für den Eingriff entsprechender Nippel aufweisen.

19. Speiche nach Anspruch 18, umfassend eine Mittelöffnung (118) mit einer Form, die der Außenform der Speiche selbst entspricht.

## Revendications

1. Rayon (10; 30; 40) pour roues (R) comprenant un axe (12; 41) ayant des extrémités longitudinales opposées sur au moins l'une desquelles un élément terminal (15; 32, 33; 46, 47) supportant un dispositif (19) pour la fixation du rayon (10; 30; 40) au composant de roue respectif est monté au moyen de moyens de fixation (14), **caractérisé en ce que** les moyens de fixation (14) comprennent une connexion filetée du type goujon entre l'axe (12; 41) et l'élément terminal (15; 32, 33; 46, 47).

2. Rayon selon la revendication 1 dans lequel la connexion du type goujon comprend un trou axial (16) dans l'extrémité de l'axe (12) et un filet (17) sur l'élément terminal (15; 32, 33; 46, 47), le couplage entre le trou (16) et le filet (17) étant du type fileté ou à auto-taraudage.

3. Rayon selon la revendication 1 ou la revendication 2 dans lequel l'axe (12) est fait d'un matériau ayant une résistance mécanique inférieure à celle du matériau dont l'élément terminal (15; 32, 33; 46, 47) est fait.

4. Rayon selon la revendication 3 dans lequel l'axe (12; 41) est fait d'alliage léger.

5. Rayon selon la revendication 3 dans lequel l'élément terminal (15; 32, 33; 46, 47) est fait d'acier.

6. Rayon selon une ou plus des revendications précédentes dans lequel le filet auto-taraudant (17) est formé avec un profil conique.

7. Rayon selon une ou plus des revendications précédentes dans lequel une clé d'entraînement (18) est placée dans une partie intermédiaire de l'élément terminal (15), pour entraîner l'élément terminal (15) dans l'axe (12).

8. Rayon selon une ou plus des revendications précédentes dans lequel l'élément terminal (15; 32, 33; 46, 47) est entraîné dans l'axe (12) avec interférence.

9. Rayon selon une ou plus des revendications précédentes dans lequel l'élément terminal (15; 32, 33; 46, 47) est pourvu, au niveau de l'extrémité distante de l'axe (12), de moyens pour connexion à un manchon fileté (N).

10. Rayon selon une ou plus des revendications précédentes dans lequel l'élément terminal (15; 32, 33; 46, 47) est pourvu, à l'extrémité distante de l'axe (12), de moyens pour connexion à un moyeu de roue.

11. Rayon selon la revendication 9 dans lequel les moyens de connexion comprennent une partie filetée (48, 49) de l'élément terminal (15; 32, 33; 46, 47).

12. Rayon selon la revendication 10 dans lequel les moyens pour connexion à un moyeu comprennent un élément de fixation.

13. Rayon selon une ou plus des revendications précédentes dans lequel le trou (44, 45) dans l'axe (41) est aveugle et a une plus grande étendue que la partie filetée (48, 49) de l'élément terminal (46, 47) qui est en prise dedans, de façon à définir une chambre (50) dans le trou (44, 45).

14. Rayon selon la revendication 13 dans lequel l'étendue axiale de la chambre est supérieure ou égale à un tiers de l'étendue axiale totale du trou (44, 45) aveugle.

15. Procédé de fabrication d'un rayon de roue (10; 30; 40) comprenant les étapes consistant à préparer un axe (12; 41) et à préparer séparément au moins un élément terminal (15; 32, 33; 46, 47) destiné à être agencé comme une extension de l'axe (12; 41), l'axe (12; 41) étant fait d'un matériau ayant une résistance mécanique inférieure à celle du matériau avec lequel l'élément terminal (15; 32, 33; 46, 47) est fait, **caractérisé en ce que** l'élément terminal (15; 32, 33; 46, 47) est monté sur l'axe (12; 41) au moyens d'une une connexion du type goujon, fixant fermement l'axe (12; 41) et l'élément terminal (15; 32, 33; 46, 47) ensemble.

16. Procédé selon la revendication 15 dans lequel la connexion est forcée avec interférence.

17. Procédé selon la revendication 15 ou la revendication 16 dans lequel la connexion du type goujon est réalisée avec un couplage auto-taraudant.

18. Rayon de roue produit par le procédé selon l'une quelconque des revendications 15 à 17, et comprenant en outre l'étape consistant à forger à la presse un alliage métallique de façon à obtenir un rayon ayant une configuration sensiblement en forme de Y avec deux tiges (105) à la même extrémité, les tiges (105) ayant des parties filetées (106) respectives pour venir en prise avec des manchons filetés respectifs.

19. Rayon selon la revendication 18 incluant une ouverture centrale (118) d'une forme correspondant à la forme extérieure du rayon lui-même.
